# EUROPÄISCHE PATENTANMELDUNG

(11) **EP 1 653 538 A1**
(43) Veröffentlichungstag der Anmeldung: **03.05.2006**
(21) Anmeldenummer: 04025786.7
(22) Anmeldetag: 29.10.2004
(51) Int. Cl.: H01M 8/02

(54) **Kühlplattenmodul mit integralem Dichtungselement für einen Brennstoffzellenstack**

(71) Anmelder: SGL CARBON AG, 65203 Wiesbaden (DE)
(72) Erfinder: Müller, Alwin, 97084 Würzburg (DE)

(57) **Zusammenfassung**

Die Erfindung betrifft ein bipolares Kühlplattenmodul für den Einsatz in Brennstoffzellenstacks. Das Modul umfasst eine anodenseitige Polplatte und eine kathodenseitige Polplatte, wobei mindestens eine der einander zugewandten Oberflächen der beiden Polplatten Kühlmittelkanäle aufweist. Die beiden Polplatten werden von einem im Spritzgussverfahren angebrachten integralen Dichtungselement, das beide Polplatten durchdringt oder/und umgreift, in ihrer Lage zueinander fixiert. Das Dichtungselement enthält eine Dichtraupe, welche die Kühlmittelverteilstruktur umschließt und den Spalt den Kühlflächen der beiden Polplatten abdichtet, sowie je eine Dichtraupe an den Grenzflächen zur Anode und zur Kathode. Diese drei Dichtraupen sind über die Polplatten durchdringende oder/und an den Stirnflächen umgreifende Elemente aus demselben Material stoffschlüssig miteinander verbunden und halten so die Polplatten untrennbar zusammen. Zwischen den Polplatten ist ein kompressibles flächiges leitfähiges Element eingelegt, das sich nur über den von der Dichtungsnut umschlossenen Bereich der Kühlflächen erstreckt, in dem sich die Kühlmittelverteilstruktur befindet. Das flächige Element hat eine Kompressionsreserve, die ausreichend ist, um den abkühlungsbedingten Dickenschwund der zwischen den Kühlflächen befindlichen Dichtraupe zu kompensieren.

## Beschreibung

Die Erfindung betrifft ein Modul aus zwei Polplatten für einen Brennstoffzellenstapel, in welchem eine anodenseitige und eine kathodenseitige Polplatte, welche eine Kühlmittelverteilstruktur dicht umschließen, durch ein beide Polplatten umgreifendes oder/und durchdringendes integrales Dichtelement miteinander verbunden sind.

### Beschreibung

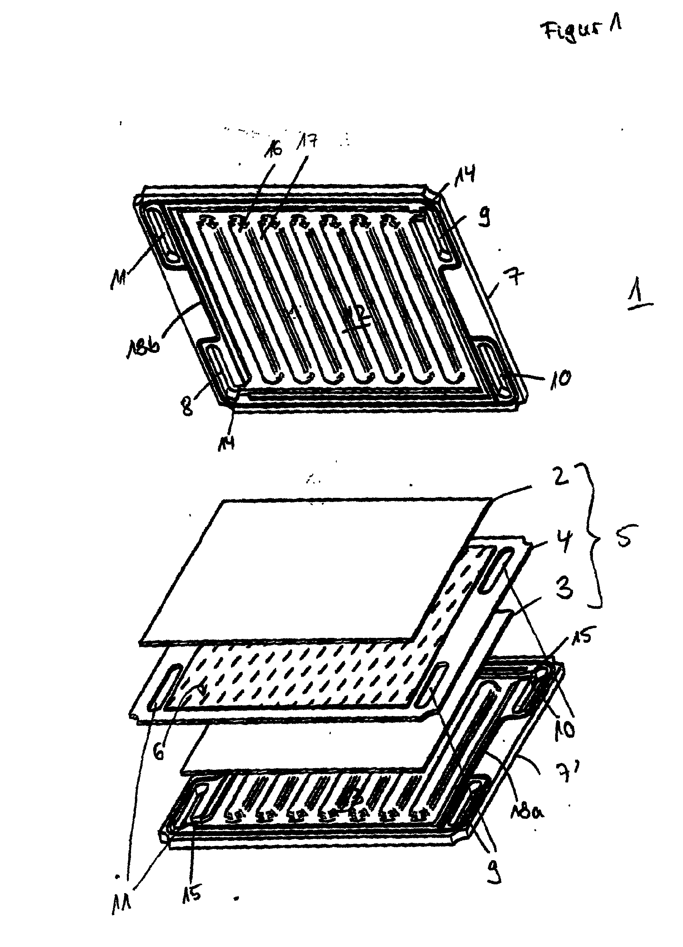

Brennstoffzellen sind Vorrichtungen zur direkten Umwandlung chemischer in elektrische Energie. Eine einzelne Brennstoffzelle 1 (Figur 1) enthält zwei Elektroden Anode 2 und Kathode 3 mit einer dazwischen liegenden Elektrolytschicht, z.B. einer Protonen leitenden Membran 4. Dieser Verbund wird als Membran-Elektroden-Einheit (MEA) 5 bezeichnet. An der Anode 2 erfolgt die Oxidation eines Brennstoffs, z.B. Wasserstoff oder Methanol, unter Freisetzung von Protonen und Elektronen. Die freigesetzten Elektronen fließen über einen äußeren Stromkreis, in welchem sie elektrische Arbeit verrichten, zur Kathode 3. Die freigesetzten Protonen werden durch die Membran 4 zur Kathode 3 transportiert. Hier wird unter Aufnahme der Elektronen und Protonen ein Oxidationsmittel, z.B. Sauerstoff, reduziert. Die Grenzflächen zwischen Anode 2 bzw. Kathode 3 und Elektrolyt 4 sind mit Katalysatoren 6 beschichtet, welche die jeweilige Elektrodenreaktion beschleunigen.
Für praktische Anwendungen wird meist eine Vielzahl von Brennstoffzellen in einem von Endplatten begrenzten Stapel ("stack") kombiniert, um die benötigte Leistung zu erreichen. Vor der ersten und nach der letzten Zelle sind Stromabnehmer vorgesehen. Die gestapelten Zellen werden durch Längsverschraubungen, Verklammerungen oder andere geeignete Mittel (in Figur 1 nicht dargestellt) aneinander gepresst und verspannt.
Üblicherweise sind die Zellen im Stack elektrisch in Serie, bezüglich der Medienführung jedoch parallel geschaltet. Den elektrischen Kontakt zwischen den benachbarten Zellen stellen Bipolarplatten (BPP) 7, 7' her. Die aufeinander folgenden BPP 7 und MEA 5 weisen fluchtend angeordnete Durchgangslöcher für die Brennstoffzufuhr 8 und die Brennstoffabfuhr 9 sowie für die Oxidationsmittelzufuhr 10 und die Oxidationsmittelabfuhr 11 auf. Diese fluchtend angeordneten Durchgangslöcher formen Verteil- und Sammelleitungen (Manifolds), welche den Stack in Stapelrichtung durchqueren und die Reaktionsmedien den einzelnen Zellen zu- bzw. von ihnen abführen.

Die Versorgung der einzelnen Elektroden mit den Reaktionsmedien erfolgt über in die Oberflächen der BPP 7 eingelassene Verteilstrukturen. Diese Verteilstrukturen umfassen für die gleichmäßige Verteilung des Reaktionsmediums über die Elektrodenfläche geeignet angeordnete Strömungswege, z.B. Kanäle 17. Hervorstehende Elemente, z.B. Stege 16 zwischen den Kanälen 17, stellen den elektronischen Kontakt zur angrenzenden Elektrode 2 bzw. 3 her. Die Verteilstruktur 12 auf der Anodenseite der BPP 7 dient zur Verteilung des Brennstoffs über die Fläche der Anode 2, die Verteilstruktur 13 auf der Kathodenseite zur Verteilung des Oxidationsmittels über die Fläche der Kathode 3. Die Verteilstrukturen 12, 13 sind mit den Durchgangslöchern der entsprechenden Medienzufuhrleitungen 8, 10 und Medienabfuhrleitungen 9, 11 verbunden. Diese Verbindungen sind in Figur 1 als 14 und 15 gekennzeichnet. Der Bereich der Oberfläche der Bipolarplatte, der über die Kontaktstege in elektrischem Kontakt und über die Medienverteilstruktur in Stoffaustausch mit der angrenzenden Elektrode steht, wird im folgenden als aktive Fläche bezeichnet. Die Durchgangslöcher 8, 9, 10, 11 liegen außerhalb der aktiven Fläche.

Neben dieser Bauweise mit Medienzufuhr- und -abfuhrleitungen, die durch fluchtende Durchgangslöcher 8, 9, 10, 11 in den Stackkomponenten gebildet werden (internal manifolding), sind auch Stacks mit außerhalb der BPP- und MEA-Oberflächen angeordneten Medienzufuhr- und -abfuhrleitungen (external manifolding) bekannt. In diesem Fall erfolgt die Medienzu- und -abfuhr über seitlich an den Stack angesetzte Verteil- und Sammelleitungen, welche mit den jeweiligen Medienverteilstrukturen auf den Plattenoberflächen verbunden sind.

Austritt und Vermischung der verschiedenen Reaktionsmedien müssen verhindert werden. Dazu wird einerseits die Anodenseite jeder BPP 7 gegen die Durchgangslöcher 10, 11 für den Oxidationsmitteltransport sowie andererseits die Kathodenseite gegen die Durchgangslöcher 8, 9 für den Brennstofftransport abgedichtet. Außerdem werden die in die Plattenoberflächen eingelassenen Verteilstrukturen 12, 13 von Dichtungen 18a, 18b so umschlossen, dass der Austritt der Reaktionsmedien an den Grenzflächen zwischen BPP und MEA verhindert wird.

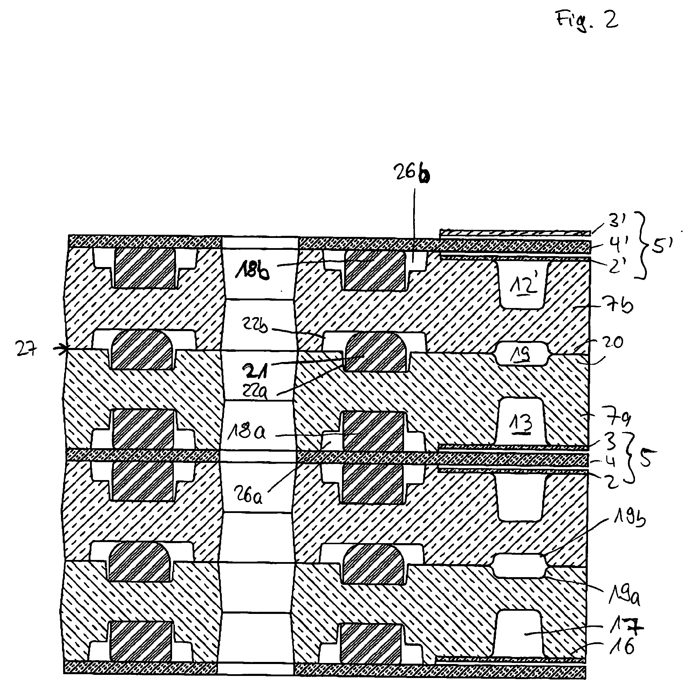

Bei den Elektrodenreaktionen wird Wärme freigesetzt. Diese muss abgeführt werden, um eine Aufheizung der Zellen zu vermeiden. Dafür wird ein Kühlmittel, z.B. deionisiertes Wasser oder ein Thermalöl, durch den Stack geleitet. In einer bekannten Ausführung (Figur 2) eines gekühlten Stacks befindet sich zwischen zwei Membran-Elektroden-Einheiten 5, 5' statt einer einstückigen Bipolarplatte 7 ein Paar aus zwei Polplatten 7a, 7b, welche eine Kühlmittelverteilstruktur umschließen. Die aneinander stoßenden Oberflächen der Polplatten 7a, 7b werden im folgenden Kühlflächen genannt. Die Kühlmittelverteilstruktur ist ähnlich aufgebaut wie die Verteilstrukturen 12, 13 für die Reaktionsmedien und umfasst in mindestens eine der Kühlflächen eingelassene Kanäle 19a bzw. 19b, durch welche das Kühlmittel fließt, und die Kanäle begrenzende Stege 20 o.ä. hervorstehende Elemente, welche den elektrischen Kontakt zwischen den benachbarten Kühlflächen herstellen und so den Stromfluss von der aktiven Fläche der Polplatte 7a zur aktiven Fläche der Polplatte 7b ermöglichen.

Für die Zu- und Abfuhr des Kühlmittels sind weitere den Stack durchquerende Transportwege vorzusehen, und die Transportwege des Kühlmittels und der Reaktionsmedien müssen gegeneinander abgedichtet werden. Weiterhin sind zwischen den Kühlflächen der Polplatten 7a, 7b Dichtungen 21 nötig, um den Austritt des Kühlmittels aus der Kühlmittelverteilstruktur zu verhindern. Die Dichtung 21 wird von in die Kühlflächen der Polplatten 7a, 7b eingelassenen, zusammen wirkenden Dichtungsnuten 22a, 22b aufgenommen.

Wie in Figur 1 und 2 dargestellt, ist in die der Anode 2' der MEA 5' zugewandte Oberfläche der anodenseitigen Polplatte 7b eine Kanalstruktur 12 zur flächigen Verteilung des Brennstoffs eingelassen. In die der Kathode 3 der MEA 5 zugewandte Oberfläche der kathodenseitigen Polplatte 7a ist eine Kanalstruktur 13 zur flächigen Verteilung des Oxidationsmittels eingelassen. In einer alternativen Variante sind die den Elektroden zugewandten Oberflächen der Polplatten eben, und die Reaktionsmedienverteilstruktur ist in die der Polplatte zugewandte Oberfläche der jeweiligen Elektrode eingelassen.

Bevorzugt werden die Dichtungen aus dichtend wirkenden Kunststoffen im Spritzgießverfahren hergestellt. Eine solche Dichtung für Brennstoffzellenstacks mit in der oben beschriebenen Weise ausgebildeten Polplattenpaaren ist aus der Europäischen Patentanmeldung EP 1 320 142 bekannt. Die Dichtung umschließt mindestens einen sandwichartigen Verbund aus zwei Polplatten mit einer dazwischen liegenden Membran-Elektroden-Einheit. Die Polplatten ragen über die seitlichen Ränder der MEA hinaus und bilden so einen Dichtspalt. Die erfindungsgemäße Dichtung besteht aus einem umlaufenden elastischen Dichtungsband, das den Verbund seitlich umfasst, mit einer umlaufenden Dichtleiste, die in den Dichtspalt hinein ragt und bei Anpressung der Polplatten den Dichtspalt gasdicht abschließt. In einer vorteilhaften Variante wird die Dichtung so ausgebildet, dass sie über die Stirnseiten der äußeren Polplatten des vom Dichtungsband umschlossenen Verbundes hinausragt, und so den Verbund klammerartig zusammen hält. Dadurch werden Module gebildet, umfassend zwei Polplatten mit einer dazwischen liegenden MEA oder zwei Polplatten mit einem dazwischen liegenden Stapel aus mehreren MEA, die durch einstückige Bipolarplatten voneinander getrennt sind. Defekte Module können innerhalb eines so aufgebauten Zellenstapels einfach gewechselt werden. Allerdings muss immer das ganze Modul ausgebaut werden, auch wenn nur eine Komponente -beispielsweise eine Membran oder eine Katalysatorschicht- versagt hat.
Die einzelnen Module nach EP 1 320 142 enthalten keine Kühlmittelverteilstruktur, denn innerhalb der Module sind nur einstückige Bipolarplatten vorgesehen. Eine Kühlmittelverteilstruktur kann nur jeweils zwischen einer äußeren Polplatte eines ersten Moduls und einer äußeren Polplatte eines angrenzenden zweiten Moduls realisiert werden. Hierbei ist von Vorteil, wenn das Dichtelement des ersten Moduls im Bereich seines Klammerrandes mit einem umlaufenden Dichtprofil und das Dichtelement des angrenzenden zweiten Moduls im Bereich seines Klammerrandes als eine ebene Fläche ausgebildet ist. Durch das Zusammenwirken der so ausgebildeten Dichtungen lässt sich das Kühlmedium, das zwischen den Modulen zirkuliert, einfach abdichten.

Eine andere Lösung für die Abdichtung der Kühlmittelverteilstruktur ist aus der Patentanmeldung WO 03 063 263 bekannt. Zwischen den Kühlflächen der beiden Polplatten, von denen eine mit einer Kühlmittelverteilstruktur in Form eines offenen Labyrinths versehen ist, wird eine in Dickenrichtung deformierbare leitfähige Zwischenschicht eingelegt, so dass das Labyrinth durch die Zwischenschicht abgedeckt wird und die Kühlkanäle verschlossen sind. Vorteilhafterweise besitzt diese Zwischenschicht Dichtfähigkeit gegenüber der Umgebungsluft sowie gegenüber den verwendeten Reaktionsmedien und dem Kühlmittel. Die deformierbare Zwischenschicht passt sich flexibel an die ihr zugewandten Oberflächen der Polplatten an, so dass für diese höhere Fertigungstoleranzen zugelassen werden können. Ein geeignetes Material für die Herstellung dieser Zwischenschicht ist Graphitfolie. Die Abmessungen der Zwischenschicht entsprechen denen der angrenzenden Polplatten, d.h. der Umriss der Zwischenschicht ist identisch mit dem Umriss der Polplatten, so dass sich die Zwischenschicht über die gesamte Oberfläche der angrenzenden Poplatte erstreckt. Bei der Montage des Stapels werden die Zwischenschichten zwischen den angrenzenden Polplatten zusammengedrückt und füllen dadurch die Spalte zwischen den Kühlflächen der Polplatten dichtend aus. Mit dieser Lösung lässt sich zwar eine zuverlässige Abdichtung der Kühlmittelverteilstruktur zwischen den Polplatten erreichen, jedoch besteht ein solcher Kühlplattenaufbau aus drei einzelnen Komponenten: zwei Polplatten und der Zwischenschicht. Zwar beinhaltet WO03063263 auch eine Variante, in der mindestens zwei oder alle drei Komponenten dieses Aufbaus durch Kleben zu einem Modul verbunden werden. Jedoch wird eingeräumt, dass die Herstellung solcher Klebeverbindungen sehr aufwändig ist. Die Anforderungen an das Klebemittel sind hoch, denn es muss sowohl leitfähig als auch gegenüber den Reaktionsmedien und dem Kühlmittel chemisch stabil sein. Außerdem muss es den Betriebstemperaturen und der Zellspannung standhalten.

Mit der vorliegenden Erfindung sollen Kühlplattenmodule bereit gestellt werden, die als komplette Baugruppen mit Membran-Elektroden-Einheiten zu einem Brennstoffzellenstack kombiniert werden können. In dem erfindungsgemäßen Kühlplattenmodul ist eine zuverlässige Abdichtung der zwischen anodenseitiger und kathodenseitiger Polplatte vorgesehenen Kühlmittelverteilstruktur gewährleistet. Darüber hinaus werden durch das erfindungsgemäße Modul auch die für die Grenzflächen zwischen den Polplatten und den Elektroden benötigten Dichtungen bereitgestellt.
Das erfindungsgemäße bipolare Kühlplattenmodul umfasst
- eine kathodenseitige Polplatte 7a und eine anodenseitige Polplatte 7b, jeweils auf den der Kathode 3 bzw. der Anode 2' zugewandten Plattenoberflächen mit Dichtungsnuten 26a bzw. 26b zur Aufnahme von Dichtungsmaterial für die Abdichtung der Grenzflächen zu den Elektroden 3 bzw. 2' versehen, sowie mit zueinander komplementären Dichtungsnuten 22a, 22b auf den Kühlflächen zur Aufnahme von Dichtungsmaterial für die Abdichtung des Spalts 27 zwischen den Kühlflächen, wobei mindestens eine der Kühlflächen eine Kühlmittelverteilstruktur aus offenen Kanälen 19a bzw. 19b aufweist, die von der umlaufenden Dichtungsnut 22a bzw. 22b umschlossenen wird,
- ein beide Polplatten 7a, 7b umgreifendes oder/und durchdringendes integrales Dichtelement 25 aus einem spritzgießbaren Material, welches die Polplatten 7a, 7b in ihrer Lage zueinander fixiert und als Verbund zusammen hält, die komplementären Dichtungsnuten 22a, 22b auf den Kühlflächen ausfüllt und den Spalt 27 zwischen den beiden Kühlflächen abdichtet, sowie die Dichtungsnuten 26a, 26b auf den den Elektroden 2', 3 zugewandten Plattenoberflächen ausfüllt und die Grenzflächen zwischen der Polplatte 7a und der Kathode 3 sowie der Polplatte 7b und der Anode 2'abdichtet.
- ein im Spalt 27 zwischen den Kühlflächen der Polplatten 7a, 7b liegendes kompressibles leitfähiges flächiges Element 28, dessen Kompressionsreserve (Federweg) größer ist als der abkühlungsbedingte Dickenschrumpf des Dichtungsmaterials in den Dichtungsnuten 22a, 22b; wobei dieses flächige Element 28 sich über den von der Dichtungsnut 22a, 22b umschlossenen Bereich der Kühlflächen der Polplatten 7a, 7b, in dem sich die Kühlmittelverteilstruktur befindet, erstreckt, jedoch nicht die Dichtungsnuten 22a, 22b und den außerhalb der Dichtungsnuten befindlichen Rand der Kühlflächen bedeckt
Die Herstellung des erfindungsgemäßen Kühlplattenmoduls erfolgt durch Anbringen des Dichtelements 25 an den Polplatten 7a, 7b, zwischen deren Kühlflächen das kompressible Element 28 eingelegt ist, im Spritzgießverfahren.
Weitere Details, Ausführungsformen und Varianten der Erfindung gehen aus der folgenden detaillierten Beschreibung, den Zeichnungen und den Ausführungsbeispielen hervor.

Die Figuren zeigen
- Figur 1: Schematischer Aufbau eines Brennstoffzellenstapels (Ausschnitt)
- Figur 2: Schematischer Aufbau (Querschnitt) einer Kühlplattenanordnung für einen Brennstoffzellenstack nach dem Stand der Technik
- Figur 3: Draufsicht auf die Kühlfläche einer Polplatte mit Kühlmittelverteilstruktur und Dichtungsnuten
- Figur 4a-f: eine erste Variante des erfindungsgemäßen Kühlplattenmoduls mit einem die Polplatten durchdringenden Dichtelement
- Figur 5a-c: eine zweite Variante des erfindungsgemäßen Kühlplattenmoduls mit einem die Polplatten umgreifenden Dichtelement

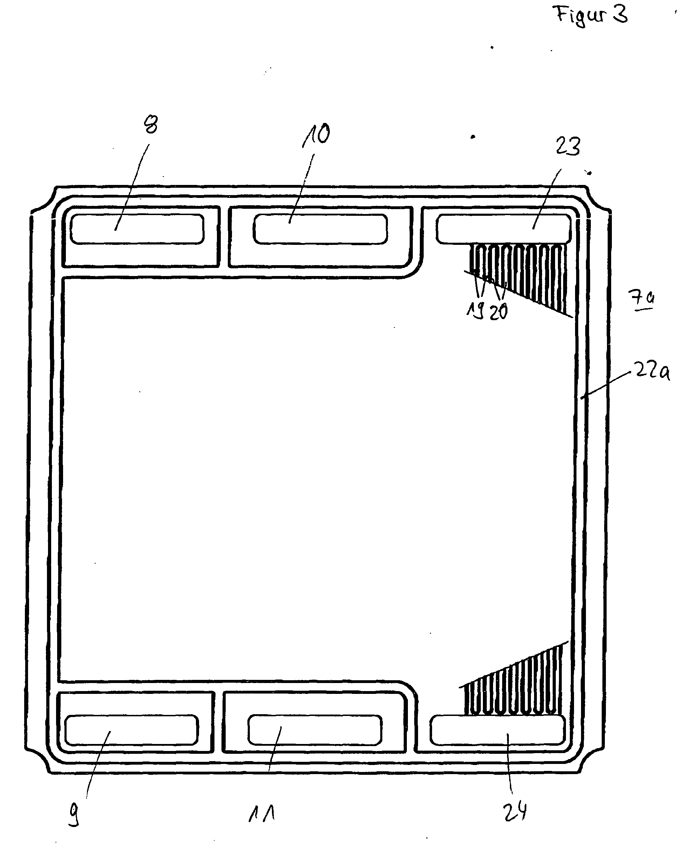

Die Erfindung wird im folgenden anhand der Figuren 3 bis 5 näher erläutert.

Figur 3 zeigt die Draufsicht auf die Kühlfläche einer Polplatte 7a mit einer angedeuteten Kühlmittelverteilstruktur und den zugehörigen Dichtungsnuten. In Stacks mit interner Medienzu- und abfuhr (internal manifolding) erfolgt die Kühlmittelzufuhr über ein Durchgangsloch 23 und die Kühlmittelabfuhr über ein Durchgangsloch 24. Alle MEA und Polplatten eines Stacks weisen jeweils an derselben Stelle solche Durchgangslöcher auf. Beim Stapeln der MEA und Polplatten zu einem Stack fluchten diese Durchgangslöcher, so dass den Stack durchquerende Transportwege gebildet werden. Das Kühlmittel tritt über das Durchgangsloch 23 aus der Zufuhrleitung in die Kühlkanäle 19 auf der Kühlfläche ein, durchströmt die Kühlmittelkanäle 19, und tritt über das Durchgangsloch 24 aus den Kühlkanälen 19 in die Kühlmittelabfuhrleitung aus.

In Figur 3 wurde der Übersichtlichkeit wegen der genaue Verlauf der Kühlkanäle ausgespart, denn dieser ist für die vorliegende Erfindung nicht relevant. Dem Fachmann ist eine Vielzahl geeigneter Kanalstrukturen ("flow fields") bekannt, die Erfindung ist nicht an eine bestimmte Kanalstruktur gebunden. Die Kanalstrukturen für die Verteilung des Kühlmittels bestehen beispielsweise aus mehreren parallelen Kanälen, die von einem gemeinsamen Zufuhrleitung gespeist werden und in eine gemeinsame Sammelleitung münden, oder aus einem oder mehreren mäanderförmig gewundenen Kanälen.
Die die Kühlkanäle 19a, 19b umfassende Kühlmittelverteilungsstruktur einschließlich der Durchgangslöcher für die Kühlmittelzufuhr 23 und die Kühlmittelabfuhr 24 ist von einer Dichtungsnut 22a umschlossen.
Bei der Bauweise "internal manifolding" weist jede Polplatte weiterhin Durchgangslöcher für die Brennstoffzufuhr 8, Brennstoffabfuhr 9, Oxidationsmittelzufuhr 10 und Oxidationsmittelabfuhr 11 des Stacks auf. Diese haben keine Verbindung zur Kühlmittelverteilstruktur. Die Durchgangslöcher 8, 9, 10, 11 werden, wie in Figur 3 dargestellt, durch von der Dichtungsnut 22a abzweigende Dichtungsnuten umschlossen.
Die Kühlfläche der zweiten Polplatte 7b, die mit der in Figur 3 dargestellten Polplatte 7a zu dem erfindungsgemäßen Kühlplattenmodul kombiniert wird, enthält an den entsprechenden Stellen komplementäre Dichtungsnuten 22b, die mit den Dichtungsnuten 22a auf der Kühlfläche der ersten Polplatte 7a zusammen wirken. In dem erfindungsgemäßen Kühlplattenmodul umschließen die Nuten 22a und 22b eine Dichtraupe 25c, die einen Teil des die beiden Polplatten umgreifenden bzw. durchdringenden und somit zusammenhaltenden Dichtelements 25 bildet.
In derselben Weise sind auf den nach außen weisenden, im Brennstoffzellenstack den Elektroden 2', 3 zugewandten Plattenoberflächen die Reaktionsmedienverteilstrukturen 12' bzw. 13 einschließlich der Durchgangslöcher 8, 9 bzw. 10, 11 für die Zu- und Abfuhr des entsprechenden Mediums sowie die Durchgangslöcher für die anderen Medien jeweils von Nuten 26a, 26b für die Aufnahme von Dichtraupen 25a (kathodenseitig) bzw. 25b (anodenseitig) umgeben. Diese Dichtraupen 25a, 25b sind ebenfalls Bestandteile des beide Polplatten 7a, 7b umgreifenden bzw. durchdringenden und somit zusammen haltenden integralen Dichtelements 25.
Die Reaktionsmittelverteilstrukturen 12' bzw. 13 können statt in die Oberflächen der Polplatten auch in die den Polplatten zugewandten Oberflächen der angrenzenden Elektroden 2', 3 eingelassen sein. Dies ändert jedoch nichts an der Lage und Funktion der Dichtungsnuten 26a, 26b und der Dichtraupen 25a, 25b in den erfindungsgemäßen Kühlplattenmodul.

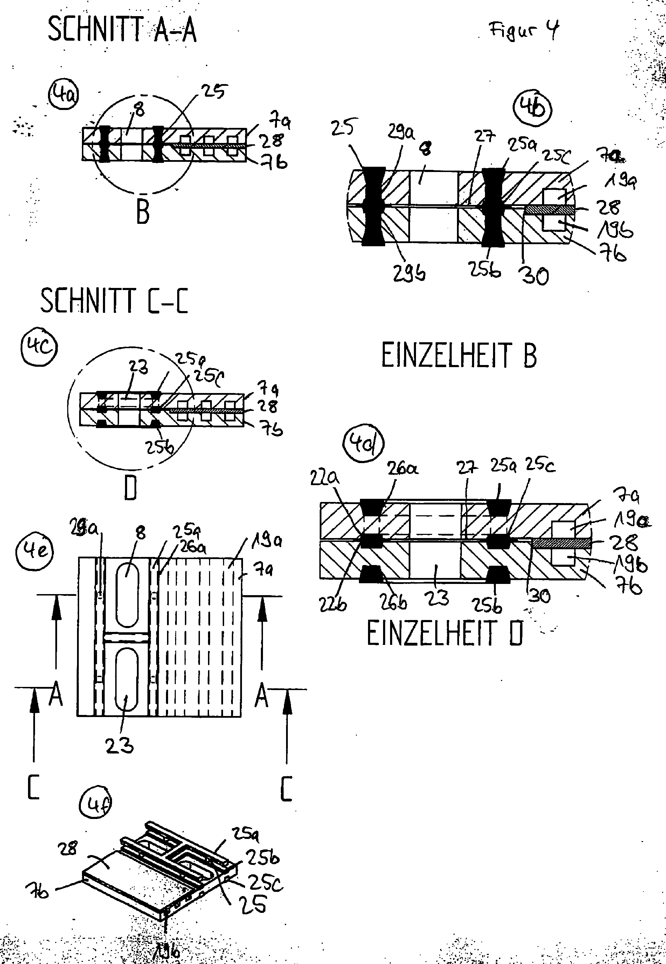

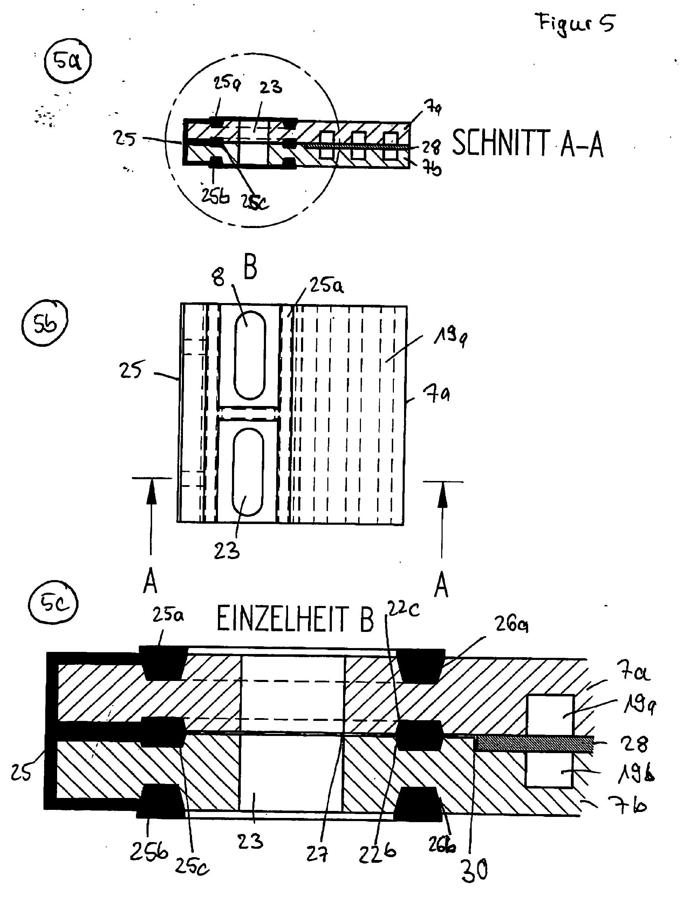

Das erfindungsgemäße integrale Dichtelement 25 ist so ausgebildet, dass es die beiden Polplatten 7a, 7b untrennbar zusammenhält, und sowohl den Spalt 27 zwischen den Kühlflächen als auch die Grenzflächen zwischen den Polplatten und den Elektroden abdichtet. Das Dichtelement 25 umfasst sämtliche an den drei Grenzflächen Polplatte 7a/Kathode 3, Kühlfläche der Polplatte 7a/Kühlfläche der Polplatte 7b, Polplatte 7b/Anode 2' benötigten Dichtungen, wobei diese Dichtungen miteinander stoffschlüssig verbunden sind und so ein integrales, die Polplatten zusammen haltendes Dichtelement 25 bilden.
Dieses Dichtelement 25 enthält drei Dichtraupen 25a, 25b, 25c: die Dichtraupe 25a an der Grenzfläche Polplatte 7a/Kathode 3, die Dichtraupe 25c in den kooperierenden Dichtungsnuten 22a, 22b auf den Kühlflächen und die Dichtraupe 25b an der Grenzfläche Polplatte 7b/Anode 2'. Die Dichtraupe 25a umschließt die Oxidationsmittelverteilstruktur 13 einschließlich der Durchgangslöcher 10, 11 für den An- und Abtransport des Oxidationsmittels und trennt diese von den Durchgangslöchern 23, 24, 8, 9 für die anderen Medien Kühlmittel und Brennstoff, die jeweils durch von der Dichtraupe 25a abzweigende Stränge aus Dichtungsmaterial komplett umschlossen sind. Die Dichtraupe 25b umschließt die Brennstoffverteilstruktur 12' einschließlich der Durchgangslöcher 8, 9 für den An- und Abtransport des Brennstoffs und trennt diese von den Durchgangslöchern 23, 24, 10, 11 für die anderen Medien Kühlmittel und Oxidationsmittel, die jeweils durch von der Dichtraupe 25b abzweigende Stränge aus Dichtungsmaterial komplett umschlossen sind. Die Dichtraupe 25c umgibt die Kühlmittelverteilstruktur einschließlich der Durchgangslöcher 23, 24 für den An- und Abtransport des Kühlmittels und trennt diese von den Durchgangslöchern 8, 9, 10, 11 für die anderen Medien Oxidationsmittel und Brennstoff, die jeweils durch von der Dichtraupe 25c abzweigende Stränge aus Dichtungsmaterial komplett umschlossen sind. Diese drei Dichtraupen 25a, 25b, 25c sind über die Polplatten durchdringende oder/und an den Stirnflächen umgreifende Elemente aus demselben Material stoffschlüssig miteinander verbunden und halten so die Polplatten untrennbar zusammen (vgl. die Figuren 4 und 5).
Im Gegensatz dazu sind nach dem Stand der Technik die Grenzflächen Polplatte 7a/Kathode 3, Polplatte 7b/Anode 2' und Kühlfläche der Polplatte 7a/Kühlfläche der Polplatte 7b jeweils durch separate Dichtungen 18a, 18b und 21 abgedichtet (vgl. die Figuren 1 und 2).

Im Spalt 27 zwischen den Kühlflächen der Polplatten 7a, 7b des erfindungsgemäßen Kühlplattenmoduls befindet sich ein kompressibles leitfähiges flächiges Element 28, dessen seitliche Ränder von den Polplatten 7a, 7b überragt werden (siehe die Querschnittsdarstellungen in den Figuren 4 und 5). Das flächige Element erstreckt sich über die von einer Dichtungsnut 22a bzw. 22b umgebene Kühlmittelverteilstruktur, ohne die Dichtungsnut 22a, 22b und die äußeren Ränder der Kühlflächen zu bedecken. Die Funktion dieses flächigen Elements 28 besteht im wesentlichen darin, eine Kompressionsreserve bereit zu stellen, welche beim Einbau in den Stack die abkühlungsbedingte Dickenschrumpfung der Dichtraupe 25c zwischen den Kühlflächen kompensiert. Vorzugsweise ist eine der Kühlflächen mit einer Vertiefung 30 versehen, welche das flächige Element 28 aufnimmt. Jedoch darf diese Vertiefung 30 nicht so tief sein, dass sie das Element 28 in seiner ganzen Dicke aufnimmt, denn dann könnte die Kompressionsreserve nicht mehr ausgeschöpft werden. Die Funktionen des Elements 28 werden weiter unten im Detail erläutert.
Für die Funktion des erfindungsgemäßen Kühlplattenmoduls ist es ausreichend, wenn eine der Kühlflächen der Polplatten 7a, 7b mit einer Kühlmittelverteilstruktur 19a bzw. 19b versehen ist. Dies kann die Kühlfläche der kathodenseitige Polplatte 7a oder der anodenseitige Polplatte 7b sein. Diese Kühlmittelverteilstruktur besteht aus zu dem kompressiblen flächigen Element 28 hin offenen Kanälen 19a bzw. 19b, die durch das flächige Element 28 abgedeckt werden. In einer alternativen Variante der Erfindung sind die Kühlflächen beider Polplatten 7a, 7b mit Kühlmittelverteilstrukturen 19a, 19b versehen. Diese beiden Kühlmittelstrukturen 19a, 19b müssen nicht miteinander kooperieren, da die Kühlmittelkanäle beider Kühlmittelverteilstrukturen 19a, 19b durch das zwischen den Polplatten 7a, 7b liegende kompressible flächige Element 28 abgedeckt werden. Daher sind die beiden Kühlmittelverteilstrukturen voneinander unabhängig und können verschieden gestaltet sein. Falls es jedoch beabsichtigt ist, dass die Kühlmittelverteilstrukturen 19a, 19b miteinander kooperieren, so lässt sich dies dadurch realisieren, dass in dem zwischen den Poplatten 7a, 7b liegenden kompressiblen flächigen Element 28 der Anordnung der Kühlkanäle 19a, 19b entsprechende Aussparungen vorgesehen sind, so dass die Kühlkanäle nicht abgedeckt werden. Diese Variante ist aber wegen des im Vergleich zu den vorherigen Varianten größeren Herstellungsaufwandes nicht bevorzugt.

Erfindungsgemäß gibt es verschiedene Varianten für die Ausbildung des integralen Dichtelements 25.

Eine erste Variante, bei der die Dichtraupen 25a, 25b, 25c über die Polplatten 7a, 7b durchdringende Verbindungsstücke aus Dichtungsmaterial stoffschlüssig miteinander verbunden sind, wird in den Figuren 4a-f gezeigt. Zur besseren Übersicht sind nur Ausschnitte aus den Polplatten 7a, 7b dargestellt, und sind die Elektroden 2', 3 weggelassen worden. Die Figuren sind so zu verstehen, dass die nach außen weisende Oberfläche der Polplatte 7a an die Kathode 3 angrenzt und die nach außen weisende Oberfläche der Polplatte 7b an die Anode 2' (vgl. hierzu auch Figur 2).

Die Dichtungsnuten 26a, 26b auf den den Elektroden 3.2' zugewandten Oberflächen der Polplatten 7a, 7b sind mittels die Polplatten 7a, 7b durchdringender Bohrungen 29a, 29b mit den Dichtungsnuten 22a, 22b auf den Kühlflächen verbunden. Dadurch wird ein zusammenhängender, beide Polplatten durchdringender Dichtungsraum, umfassend die Dichtungsnut 26a, die Bohrungen 29a in der Polplatte 7a, die Dichtungsnuten 22a, 22b auf den Kühlflächen der Polplatten 7a, 7b, die Bohrungen 29b in der Polplatte 7b und die Dichtungsnut 26b ausgebildet. Wenn dieser Raum komplett mit Dichtungsmaterial gefüllt ist, sind die Dichtraupen 25a, 25b, 25c durch das Dichtungsmaterial in den Bohrungen 29a, 29b stoffschlüssig miteinander verbunden. Auf diese Weise werden die Polplatten 7a, 7b durch ein beide Polplatten durchdringendes integrales Dichtungselement 25 in ihrer Lage zueinander fixiert und zusammen gehalten (siehe die Querschnittsdarstellungen in den Figuren 4a und 4b, die einen Querschnitt durch das Kühlplattenmodul entlang der mit Dichtungsmaterial gefüllten Bohrungen 29a, 29b zeigen). Der räumliche Aufbau dieses integralen Dichtelements 25 ist aus Figur 4f ersichtlich, in der zur besseren Übersicht hier die obere Polplatte 7a weggelassen wurde.
Die Figuren 4c und 4d zeigen einen weiteren Querschnitt durch das erfindungsgemäße Kühlplattenmodul, jedoch nicht entlang der Bohrungen 29a, 29b.
Der in der Dichtungsnut 26a auf der zur Kathode 3 weisenden Oberfläche der Polplatte 7a liegende Teil 25a des Dichtelementes 25 (in Draufsicht dargestellt in Figur 4e) dichtet die Grenzfläche zwischen Polplatte 7a und der Kathode 3 der angrenzenden MEA 5 ab. Der in der Dichtungsnut 26b auf der zur Anode 2' gewandten Oberfläche der Polplatte 7b liegende Teil 25b des Dichtelementes 25 dichtet die Grenzfläche zwischen der Polplatte 7b und der Anode 2' der angrenzenden MEA 5' ab. Der in den Dichtungsnuten 22a, 22b auf den Kühlflächen der Polplatten 7a, 7b eingebettete Teil 25c des Dichtelements 25 dichtet den Spalt 27 zwischen den Kühlflächen ab.
Vorteilhaft sind auf den zu den Elektroden 2', 3 gewandten Oberflächen der Polplatten 7a, 7b die Dichtungsnuten 26a, 26b so angeordnet, dass sie den Dichtungsnuten 22a, 22b auf den Kühlflächen genau gegenüber liegen (siehe die Querschnittsdarstellungen in Figur 4a und 4b). Die Dichtungsnuten 22a, 26a sowie 22b, 26b werden durch Bohrungen 29a bzw. 29b verbunden, die den zwischen den Böden der Dichtungsnuten 22a, 26a bzw. 22b, 26b stehen bleibenden Materialsteg durchqueren.
Beim Spritzgießen dieser Ausführung des Dichtelements 25 wird das Dichtungsmaterial beispielsweise in eine der Nuten 26a, 26b oder beide oder/und in den Spalt 27 eingespritzt und dringt durch die Bohrungen 29a, 29b in die auf den Kühlflächen liegenden Dichtnuten 22a, 22b und bildet dort die Dichtraupe 25c. Weiter füllt das Material die Bohrungen 29a, 29b und bildet schließlich in den Dichtungsnuten 26a, 26b die Dichtraupen 25a, 25b.
Aus den Dichtungsnuten 22a, 22b tritt das Dichtungsmaterial, wie in Figur 4b und 4d gezeigt, auch in den Spalt 27 zwischen den Kühlflächen ein, wobei der Fließweg abhängig von der Viskosität des Dichtungsmaterials ist. Es kann jedoch nicht soweit in den Spalt 27 vordringen, dass es die Kühlkanäle 19a, 19b erreicht und füllt, denn diese werden von dem flächigen Element 28 bedeckt, welches dicht an den Kühlflächen anliegt und so eine Sperre für das einfließende Dichtungsmaterial bildet.
Es muss auch verhindert werden, dass das Dichtungsmaterial aus dem Spalt 27 in die Durchgangslöcher 8, 9, 10, 11, 23, 24 fließt. Prinzipiell lässt sich dies erreichen, indem im Spritzgusswerkzeug Vorrichtungen vorgesehen werden, welche die Durchgangslöcher blockieren. Diese Variante ist jedoch wegen der aufwändigen Werkzeugkonstruktion und der Schwierigkeiten beim Entformen eines solchen Werkzeugs nicht bevorzugt. Jedoch lässt sich der Fluss des Dichtungsmaterials in den Spalt 27 hinein dadurch begrenzen, dass dieser Spalt so schmal wie möglich gehalten wird. Die Weite des Spalts wird von der Dicke des Elements 28 bestimmt. Um die Spaltweite zu minimieren, wird auf einer der beiden Kühlflächen eine Vertiefung 30 zur Aufnahme des Elements 28 vorgesehen, deren Tiefe jedoch kleiner ist als die Dicke des Elements 28. Die Vertiefung 30 muss so ausgelegt werden, dass das darin eingelegte flächige Element 28 im Spritzgusswerkzeug dicht an den Kühlflächen anliegt, und beim Einbau in einen Brennstoffzellenstack noch soweit herausragt, dass der Kompressionsweg ausreicht, um den abkühlungsbedingten Schrumpf der spritzgegossenen Dichtung 25c zu kompensieren.

In der zweiten erfindungsgemäßen Variante (Figuren 5a-c) umschließt das spritzgegossene Dichtelement 25 die Stirnflächen der Polplatten 7a, 7b komplett, ragt in den Spalt 27 zwischen den Kühlflächen 7a, 7b hinein und erstreckt sich bis in die umlaufenden Nuten 22a, 22b, in denen eine Dichtraupe 25c ausgebildet ist. Außerdem erstreckt sich das umlaufende Dichtelement 25 auf die der Anode 2' zugewandte Oberfläche der Polplatte 7b bis in die Dichtungsnut 26b, in welcher eine Dichtraupe 25b ausgebildet ist, sowie auf die der Kathode 3 zugewandte Oberfläche der Polplatte 7a bis in die Dichtungsnut 26a, in welcher eine Dichtraupe 25a ausbildet ist (siehe die Querschnittsdarstellungen des erfindungsgemäßen Kühlplattenmoduls in Figur 5a und 5c). Zur besseren Übersicht sind wie in den Figuren 4a-f nur Ausschnitte der Polplatten 7a, 7b dargestellt und die Elektroden 2', 3 in den Figuren 5a und 5c weggelassen worden. Die Figuren sind so zu verstehen, dass die nach außen weisende Oberfläche der Polplatte 7a an die Kathode 3 angrenzt und die nach außen weisende Oberfläche der Polplatte 7b an die Anode 2' (vgl. hierzu auch Figur 2).
Entsprechend Figur 5a-c entsteht ein zusammenhängendes Dichtelement 25, dass die Dichtraupen 25a, 25b in den Nuten 26a, 26b auf den zu den Elektroden 2', 3 zugewandten Oberflächen der Polplatten 7a, 7b über das die Stirnseiten der Polplatten 7a, 7b umgebende Dichtungsmaterial mit der Dichtraupe 25c in den Dichtungsnuten 22a, 22b zwischen den Kühlflächen stoffschlüssig verbindet. Dieses beide Polplatten 7a, 7b umgreifende integrale Dichtelement 25 fixiert die Polplatten 7a, 7b mit dem dazwischen gelegten kompressiblen Element 28 in ihrer Lage zueinander und hält sie zusammen.
Der in der Dichtungsnut 26a auf der zur Kathode 3 gewandten Oberfläche der Polplatte 7a liegende Teil 25a des Dichtelementes 25 (als Draufsicht in Figur 5c dargestellt) dichtet die Grenzfläche zwischen der Polplatte 7a und der Kathode 3 der angrenzenden MEA 5 ab. Der in der Dichtungsnut 26b auf der zur Anode 2' weisenden Oberfläche der Polplatte 7b liegende Teil 25b des Dichtelementes 25 dichtet die Grenzfläche zwischen Polplatte 7b und der Anode 2' der angrenzenden MEA 5' ab. Der in den Dichtungsnuten 22a, 22b auf den Kühlflächen der Polplatten 7a, 7b eingebettete Teil 25c des Dichtelements 25 dichtet den Spalt 27 zwischen den Kühlflächen ab.
Beim Spritzgießen dieser Variante des erfindungsgemäßen Dichtelements 25 wird das Dichtungsmaterial vorzugsweise an den Stirnseiten der Polplatten 7a, 7b angespritzt. Von hier aus tritt das Dichtungsmaterial in den Spalt 27 ein und füllt die kooperierenden Dichtungsnute 22a, 22b auf den Kühlflächen und bildet die Dichtraupe 25c. Es kann jedoch nicht soweit in den Spalt 27 vordringen, dass es die Kühlkanäle erreicht und füllt, denn diese werden von dem flächigen Element 28 bedeckt, welches dicht an den Kühlflächen anliegt und so eine Sperre für das einfließende Dichtungsmaterial bildet. Parallel fließt das Dichtungsmaterial auf die nach außen weisenden Oberflächen der Platten 7a, 7b und füllt dort die Dichtungsnuten 26a, 26b unter Ausbildung der Dichtraupen 25a, 25b.
Genauso wie bei der vorher beschriebenen Variante nach Figur 4 wird auch hier der Spalt 27 durch Einbettung des Elements 28 in einer Vertiefung 30 möglichst eng gehalten, um das Eindringen des eingespritzten Dichtmaterials in die Durchgangslöcher 8, 9, 10 ,11, 23, 24 zu verhindern. Darüber hinaus besteht auch hier die Möglichkeit einer werkzeugseitigen Blockierung der Durchgangslöcher während des Spritzgussprozesses, jedoch ist die se Variante wegen der aufwändigen Werkzeugauslegung nicht bevorzugt.

Schließlich können auch die Varianten aus Figur 4 und Figur 5 miteinander kombiniert werden, so dass die stoffschlüssige Verbindung zwischen den Dichtraupen 25a, 25b auf den den Elektroden 3, 2' zugewandten Plattenoberflächen und der Dichtraupe 25c zwischen den Kühlflächen sowohl über die Polplatten 7a, 7b durchdringende, die Dichtungsnuten auf den gegenüberliegenden Plattenoberflächen verbindende, mit dem Dichtungsmaterial gefüllte Bohrungen 29a, 29b als auch über aus den Dichtspalten heraustretendes und die Stirnflächen der Polplatten umgreifendes Dichtungsmaterial realisiert wird.

Die Herstellung des Dichtelements 25 erfolgt mittels Spritzgießen in einem entsprechend ausgelegten Werkzeug, in welchem die vorgeformten Polplatten 7a, 7b mit dem dazwischen positionierten kompressiblen Element 28 eingelegt worden sind. Nach dem Spritzgießprozess kühlt das Dichtungsmaterial ab, wobei es unvermeidlich schrumpft. Anschließend wird das Werkzeug entformt, d.h. der Verbund wird entnommen.

Das zwischen den Kühlflächen liegende, sich über die von der Dichtraupe 25c umgebene Kühlmittelverteilstruktur 19 erstreckende flächige kompressible Element 28 selbst hat keine Dichtungsfunktion, sondern unterstützende Funktionen, die im folgenden erläutert werden.
Das Dichtelement 25 besteht aus einem Kunststoff, beispielsweise einem thermoplastische Elastomer (z.B. Ethylen/Propylen/Dien-Elastomer), thermoplastischem Urethan oder Liquid Silicone Rubber, der im Spritzgießverfahren so appliziert wird, dass die Dichtungsnute 22a, 22b komplett mit einer Dichtraupe 25c ausgefüllt werden. Bei der anschließenden Abkühlung schrumpft das Dichtungsmaterial unvermeidlich. Es ist bekannt, dass solche Materialien pro Millimeter Abmessung um ein bis zwei Hundertstel schrumpfen. Dies hat zur Folge, dass die Dichtungsnute 22a, 22b und der Spalt 27 nicht komplett mit dem Dichtungsmaterial gefüllt sind und die Dichtungsfunktion nicht zuverlässig gewährleistet wird.
Dieser Nachteil wird durch den erfindungsgemäßen Aufbau des Kühlplattenmoduls in der folgenden Art und Weise überwunden. Zur Herstellung des Dichtelementes 25 werden die Polplatten 7a, 7b mit dem dazwischen liegenden kompressiblen Element 28 in das Spritzgusswerkzeug eingelegt. Das Spritzgusswerkzeug wird so ausgelegt, dass das kompressible Element 28 dicht an den Kühlflächen der Polplatten 7a, 7b anliegt. Jedoch darf die Kompressiblitätsreserve des kompressiblen Elements 28 im Werkzeug noch nicht komplett ausgeschöpft, also seine Dicke nicht um den maximal möglichen Kompressionsweg verringert werden. Vielmehr ist das Werkzeug so zu dimensionieren, dass das kompressible Element noch eine Kompressiblitätsreserve behält, deren Kompressionsweg mindestens so groß ist wie der zu erwartende abkühlungsbedingte Schrumpf des Dichtungsmaterials in der Dichtraupe 25c. Üblicherweise hat die Dichtraupe 25c eine Dicke von ca. 0,5 bis 2 mm, bei einem abkühlungsbedingter Schrumpf von maximal 2 % (s.o.) ist also eine Kompressiblitätsreserve von maximal 0,04 mm vorzuhalten.
Ggf. wird auf einer der Kühlflächen eine Vertiefung 30 zur Aufnahme des flächigen Elements 28 vorgesehen. Diese Vertiefung darf jedoch das Element 28 nicht in seiner gesamten Dicke aufnehmen, es muss noch so weit herausragen, dass seine Kompressionsreserve noch den thermischen Schrumpf der Dichtung kompensieren kann. Der Vorteil des Einbettens des flächigen Elements 28 in einer Vertiefung 30 besteht darin, dass der Spalt 27 zwischen den Kühlflächen enger wird, und dass grundsätzlich dickere Schichten 28 verwendet werden können als ohne Einbettung in die Vertiefung. Eine dickere Schicht wiederum würde bei gleichem Material eine größere Kompressionsreserve bereitstellen.
Das Dichtungsmaterial gelangt beim Einspritzen durch den Spalt 27 zwischen den Kühlflächen oder/und aus den Dichtungsnuten 26a, 26b auf den nach außen weisenden Oberflächen der Polplatten 7a, 7b über Bohrungen 29a, 29b in die Dichtungsnute 22a, 22b. Dabei muss verhindert werden, dass das Dichtungsmaterial so weit in den Spalt 27 zwischen den Kühlflächen vordringt, dass es in die Kühlkanäle 19 gelangt und diese verstopft. Dies wird durch das zwischen den Kühlflächen vorgesehene, sich über die Kühlmittelverteilstruktur erstreckende kompressible flächige Element 28 verhindert, denn dieses liegt dicht an den Kühlflächen an und versperrt dem fließenden Dichtungsmaterial den weiteren Eintritt in den Spalt 27, so dass es nicht in den Bereich der Kühlmittelverteilstruktur 19 vordringen kann.
Um auch ein Vordringen des eingespritzten Dichtungsmaterials in die Durchgangslöcher 8, 9, 10, 11, 23, 24 zu vermeiden, muss der Spalt 27 möglichst schmal sein. Dessen Weite wird von der Dicke des Elements 28 bestimmt, wenn ein Teil der Dicke des Elements 28 aber von der Vertiefung 30 aufgenommen wird, lässt sich der Spalt 27 entsprechend schmal halten.
Zusammenfassend lassen sich die Funktionen des kompressiblen Elements 28 wie folgt benennen:
(1) Bildung einer Sperre, die beim Spritzgießen des Dichtelements 25 das Vordringen des fließenden Dichtungsmaterials durch den Spalt 27 zwischen den Kühlflächen in die Kühlkanäle 19a, 19b verhindert
(2) Bereitstellen einer Kompressiblitätsreserve, die bei Kompression im Brennstoffzellenstack den abkühlungsbedingten Schrumpf der Dichtraupe 25c, welche den Spalt zwischen den Kühlflächen der Polplatten 7a, 7b abdichten soll, kompensiert

Die beiden Polplatten 7a, 7b mit dem dazwischen liegenden kompressiblen Element 28 sind durch das Dichtelement 25 in ihrer Lage zueinander fixiert und werden als Verbund zusammen gehalten. Die so erhaltenen erfindungsgemäßen bipolaren Kühlplattenmodule sind montagefertig. Durch alternierendes Übereinanderstapeln von erfindungsgemäßen Kühlplattenmodulen und Membran-Elektroden-Einheiten, wobei jeweils auf die Anodenplatte eines Kühlplattenmoduls die Anode einer Membran-Elektroden-Einheit und auf die Kathodenplatte eines Kühlplattenmoduls die Kathode einer Membran-Elektroden-Einheit folgt, Anbringen von Stromabnehmern vor der ersten und nach der letzten Polplatte, ggf. Anbringen externer Manifolds u.a. Zusatzkomponenten und Verspannen des Stapels zwischen Endplatten wird ein Brennstoffzellenstack erhalten.
Im fertig montierten Stack wirkt auf die Komponenten ein Druck von ca. 0,5 bis 3 MPa. Dadurch wird die Kompressionsreserve (der Federweg) des kompressiblen Elements 28 so weit ausgeschöpft, so dass sich die Dicke des kompressiblen Elements mindestens um die abkühlungsbedingte Schrumpfung der Dichtraupe 25c verringert. Ggf. wird auch die Kompressiblitätsreserve des Dichtungsmaterials komplett oder teilweise ausgeschöpft, das heißt der Kompressionsweg des kompressiblen Elementes umfasst dann die abkühlungsbedingte Schrumpfung des Dichtmaterials und je nach Presskraft den gesamten Kompressionsweg des Dichtungsmaterials oder einen Teil des Kompressionsweges des Dichtungsmaterials. So ist gewährleistet, dass das Dichtungsmaterial die Dichtungsnut 22a, 22b komplett ausfüllt und den Spalt zwischen den Kühlflächen zuverlässig abdichtet.
Weil die Dichtungsnut in dem erfindungsgemäßen Kühlplattenmodul auf jeden Fall komplett vom Dichtungsmaterial der Dichtraupe 25c ausgefüllt wird, müssen für die Fertigung der Dichtungsnute 22a, 22b keine engen Toleranzen eingehalten werden. Das komprimierte Dichtungsmaterial passt sich an die Wandung der Nut an und gleicht ggf. vorhandene Unebenheiten der Nutoberflächen aus.

Aus der Position des kompressiblen Elements 28 zwischen den Kühlflächen der Polplatten 7a, 7b ergibt sich die zwingende Notwendigkeit elektronischer Leitfähigkeit, da anderenfalls der elektrische Kontakt zwischen den Polplatten nicht möglich wäre. Ein geeignetes Material, das alle Anforderungen an das Element 28 hinsichtlich elektrischer Leitfähigkeit und Kompressiblität erfüllt, ist Folie aus flexiblem Graphit. Ein weiterer Vorteil dieses Materials besteht in seiner Fähigkeit, sich flexibel an die benachbarten Oberflächen anzupassen und so eventuelle Abweichungen von der Planparallelität der Oberflächen auszugleichen. Beispielsweise lässt sich eine als kommerzielles Produkt erhältliche Graphitfolie mit einer Ausgangsdicke von 500 µm bei einer Flächenpressung von ca. 3 MPa (also einer Flächenpressung vergleichbarer Größe wie im Brennstoffzellenstack) um 10 %, also um 50 µm kompriemieren. Diese Kompressionsreserve ist ausreichend, um den zu erwartenden Dickenschrumpf der Dichtraupe zu kompensieren.
Aufgrund dieses günstigen Eigenschaftsprofils werden Folien aus flexiblem Graphit bereits seit langem als Dichtungsmaterialien benutzt. Die Herstellung von Folie aus flexiblem Graphit ist in der Fachwelt bekannt. Geeignete Alternativen sind Vliese, Filze, Papiere oder Gewebe aus Kohlenstoff- oder Graphitfasern, sofern sie eine hinreichende Kompressiblität aufweisen, um durch Ausschöpfen des Kompressionsweges die Schrumpfung des Dichtungsmaterials zu kompensieren.

Die Erfindung ist nicht an ein bestimmtes Material für die Polplatten 7a, 7b gebunden, sondern für alle nach dem Stand der Technik für die Herstellung von Bipolarplatten anwendbaren Materialien geeignet, beispielsweise Graphit, Metall oder Verbundwerkstoffe aus Kunststoff und leitfähigen Partikeln. Entscheidend ist, dass das Material elektrisch leitfähig, korrosionsbeständig und impermeabel ist sowie mit vertretbarem Aufwand in die benötigte Form gebracht werden kann.
Nicht ausreichend korrosionsbeständige Metalle müssen zur Verminderung der Korrosion legiert oder/und mit einem korrosionsfesten elektrisch leitfähigem Überzug, beispielsweise aus einem Edelmetall, versehen werden.
Graphit kann in verschiedenen Formen eingesetzt werden. Aus monolithischen Blöcken von synthetischem Graphit können durch spanende Bearbeitung Polplatten gefertigt werden. Andererseits können entsprechend strukturierte Folien aus flexiblem Graphit als Polplatten benutzt werden.
Besonders vorteilhaft ist die Herstellung der Polplatten aus Verbundwerkstoffen aus Kunststoff und leitfähigen Partikeln, weil hier aus der Kunststofftechnik bekannte Formgebungsverfahren wie Spritzgießen -ggf. mit einigen Modifikationen- eingesetzt werden können. In herkömmlichen isolierenden Kunststoffen wie Polypropylen, Polyvinylidenflurorid, Vinylester oder Phenol- oder Epoxidiharzen kann durch Zusatz leitfähiger Partikel, beispielsweise Partikel aus synthetischem oder Naturgraphit, Graphitexpandat, Ruß, Kohlenstofffasern, Metallspäne, Metallfasern oder Kombinationen aus mehreren dieser leitfähigen Partikelsorten, elektrische Leitfähigkeit erzielt werden. Die Konzentration der leitfähigen Partikel muss hoch genug sein, um die Perkolationsschwelle zu überschreiten, so dass in der Kunststoffmatrix ein durchgehendes Netzwerk von elektrischen Leitungspfaden entsteht. Der dazu nötige hohe massenbezogene Anteil der leitfähigen Partikel (über 60 %) vermindert jedoch die Fließfähigkeit des Kunststoffs, so dass bei seiner Verarbeitung mittels bekannter Kunststoffverarbeitungsverfahren entsprechende Vorkehrungen getroffen werden müssen. Diese Maßnahmen sind jedoch dem Fachmann bekannt. Alternativ können Polplatten aus einem Verbundwerkstoff aus Kunststoff und leitfähigen Partikeln in einem entsprechend strukturierten Presswerkzeug geformt werden.
Es ist besonders bevorzugt, die Polplatten aus einem spritzgießbaren leitfähigen Kunststoff oder aus einem spritzgießbaren leitfähige Partikel enthaltenden Kunststoff herzustellen..
Es ist auch bekannt, den Einsatz des schwer zu verarbeitenden und auch vergleichsweise teuren leitfähigen Materials auf den Bereich der Polplatten zu beschränken, der funktionsbedingt leitfähig sein muss, um den elektrischen Kontakt zu den angrenzenden Elektroden herzustellen. Der über die Elektrodenfläche hinausragende Randbereich der Polplatte, in dem vorzugsweise auch die Durchgangslöcher für die den Stack durchquerenden Transportwege für Reaktionsmedien und Kühlwasser lokalisiert sind, wird aus einem auch bei komplizierten Formen leicht verarbeitbaren, preiswerten Kunststoff ohne leitfähigen Zusatz hergestellt. Vorzugsweise ist dies derselbe Kunststoff wie der im leitfähigen Bereich eingesetzte oder ein mit diesem kompatibler Kunststoff, damit sich zwischen den beiden Bereichen ein stoffschlüssiger Verbund ausbildet. Weitere Details solcher aus leitfähigen und nicht leitfähigen Bereichen bestehender Polplatten bzw. Bipolarplatten sind aus der EP 1 367 664 bekannt. Im Zusammenhang mit der vorliegenden Erfindung ist es vorteilhaft, die Dichtungsnuten 22a, 22b, 26a, 26b und ggf. die Nuten verbindenden Bohrungen 29a, 29b im nicht leitfähigen Randbereich der Polplatten vorzusehen, da dieser aus einem leichter formbaren Material hergestellt werden kann.

Die Erfindung wurde hier zwar beispielhaft für stacks mit internen Medienzu- und -abfuhrleitungen erläutert. Sie ist jedoch nicht an diese Bauweise gebunden, sondern lässt sich unter Anpassung des Verlaufs der Dichtraupen an die Lage der Medienzufuhr- und abfuhr außerhalb der Plattenoberflächen auch für stacks mit externen Medienzu- und -abfuhrleitungen nutzen.

Die erfindungsgemäßen Kühlplattenmodule weisen mehrere Vorteile auf.
Zunächst ist die vollständige Füllung der Dichtungsnuten mit einem im Spritzgießverfahren eingebrachten Dichtungsmaterial trotz dessen abkühlungsbedingten Schrumpfung sichergestellt. Gleichzeitig wird dadurch, dass das kompressible Element 28 als Sperre wirkt, verhindert, dass das Dichtungsmaterial in den Bereich der Kühlmittelverteilstruktur vordringt und die Kühlkanäle 19a, 19b verstopft.
Ein weiterer Vorteil besteht darin, dass durch ein einziges, integrales Dichtelement 25 sämtliche Dichtfunktionen für alle Grenzflächen erfüllt werden. So wird der Stackaufbau vereinfacht, und statt mehrerer separater Prozessschritte für das Abdichten der einzelnen Grenzflächen mit Dichtungen 18a, 18b und 21 (Figuren 1 und 2) ist nur noch ein Prozessschritt erforderlich.
Weiterhin ermöglicht das erfindungsgemäße Konzept, Einheiten aus anodenseitiger und kathodenseitiger Polplatte mit Kühlmittelverteilungsstruktur und allen für das gegenseitige Abdichten der Fließwege der verschiedenen Medien notwendigen Dichtungen als komplette Baugruppe herzustellen. Diese erfindungsgemäßen Baugruppen können direkt mit Membran/Elektroden-Einheiten (MEA) zu einen Zellenstapel (Stack) montiert und verspannt werden, ohne dass bei dem Montageprozess weitere Dichtungen anzubringen sind.
Dieser Stack besteht aus zwei Arten von Baugruppen, zwischen denen die verschiedenen Funktionen separiert sind: die Membran-Elektroden-Einheiten übernehmen die elektrochemische Funktion und die Kühlplattenmodule übernehmen die Funktionen der seriellen elektrischen Verschaltung, der Medienverteilung und der Abdichtung. In einem solchen Stack können defekte Kühlplattenmodule bzw. defekte Membran-Elektroden-Einheiten unabhängig voneinander ersetzt werden. Dies ist ein Vorteil gegenüber dem aus dem Stand der Technik nach EP 1 320 142 bekannten Konzept, bei dem der Brennstoffzellenstack aus einzelnen Modulen besteht, die Polplatten und Membran-Elektroden-Einheiten umfassen, so dass jedes einzelne Modul sowohl elektrochemische Funktionen als auch die Funktionen der seriellen elektrischen Kontaktierung, der Medienverteilung und der Abdichtung erfüllen muss. Dieser Stack enthält zwar im wesentlichen nur eine Sorte von Baugruppen, diese sind aber wesentlich komplexer in ihrem Aufbau und müssen mehrere Funktionen erfüllen.
Es ist aber weniger wahrscheinlich, dass ein solches Modul hinsichtlich der Gesamtheit seiner Funktionen versagt, d.h. gleichzeitig eine MEA und die angrenzenden Polplatten versagen ausgewechselt werden müssen. Häufiger wird der Fall auftreten, dass entweder eine Membran-Elektroden-Einheit ausgewechselt werden muss, beispielsweise wegen irreversibler Austrocknung der protonenleitender Membran, irreversibler Deaktivierung von Katalysatoren oder Punktierung der Membran, oder eine Polplatte muss ausgetauscht werden wegen Undichtigkeit oder Materialermüdung. Dies ist mit dem erfindungsgemäßen Konzept möglich, während bei dem Konzept nach dem Stand der Technik in einem solchen Fall beim Ausbau defekter Module auch Komponenten mit ausgebaut und verworfen werden, die selbst nicht defekt sind.

## Patentansprüche

1. Ein bipolares Kühlplattenmodul für einen Brennstoffzellenstack, wobei das Kühlplattenmodul folgende Komponenten umfasst:
• eine kathodenseitige Polplatte (7a) und eine anodenseitige Polplatte (7b), jeweils auf den der Kathode (3) bzw. der Anode (2') zugewandten Plattenoberflächen mit Dichtungsnuten (26a, 26b) zur Aufnahme von Dichtungsmaterial für die Abdichtung der Grenzflächen zu den Elektroden (3) bzw. (2') versehen, sowie mit zueinander komplementären Dichtungsnuten (22a, 22b) auf den als Kühlflächen wirkenden einander zugewandten Plattenoberflächen zur Aufnahme von Dichtungsmaterial für die Abdichtung des Spalts (27) zwischen den Kühlflächen, wobei mindestens eine der Kühlflächen eine Kühlmittelverteilstruktur aus offenen Kanälen (19a bzw. 19b) aufweist, die von der umlaufenden Dichtungsnut (22a bzw. 22b) umschlossenen wird,
• ein beide Polplatten (7a, 7b) umgreifendes oder/und durchdringendes integrales Dichtelement (25) aus einem spritzgießbaren Material, welches die Polplatten (7a, 7b) in ihrer Lage zueinander fixiert und als Verbund zusammen hält, die komplementären Dichtungsnuten (22a, 22b) auf den Kühlflächen ausfüllt und den Spalt (27) zwischen den beiden Kühlflächen abdichtet, sowie die Dichtungsnuten (26a, 26b) auf den den Elektroden (2', 3) zugewandten Plattenoberflächen ausfüllt und die Grenzflächen zwischen der Polplatte (7a) und der Kathode (3) sowie der Polplatte (7b) und der Anode (2') abdichtet.
• ein im Spalt (27) zwischen den Kühlflächen der Polplatten (7a, 7b) liegendes kompressibles leitfähiges flächiges Element (28), dessen Kompressionsreserve größer ist als der abkühlungsbedingte Dickenschrumpf des spritzgegossenen Dichtungsmaterials in den Dichtungsnuten (22a, 22b), wobei dieses flächige Element (28) sich nur über den von den mit Dichtungsmaterial gefüllten komplementären Dichtungsnuten (22a, 22b) umschlossenen Bereich der Kühlflächen der Polplatten (7a, 7b), in dem sich die Kühlmittelverteilstruktur befindet, erstreckt.

2. Kühlplattenmodul nach Anspruch 1, **dadurch gekennzeichnet, dass** das beide Polplatten (7a, 7b) umgreifende oder/und durchdringende integrale Dichtelement (25) drei miteinander stoffschlüssig verbundene Dichtraupen (25a, 25c, 25b) umfasst, wobei
• die Dichtraupe (25a) die Dichtungsnut (26a) auf der der Kathode (3) zugewandten Oberfläche der Polplatte (7a) ausfüllt und die Grenzfläche zwischen der Polplatte (7a) und der Kathode (3) abdichtet
• die Dichtraupe (25b) die Dichtungsnut (26b) auf der der Anode (2') zugewandten Oberfläche der Polplatte (7b) ausfüllt und die Grenzfläche zwischen der Polplatte (7b) und der Anode (2') abdichtet
• die Dichtraupe (25c) die komplementären Dichtungsnuten (22a, 22b) auf den Kühlflächen ausfüllt und den Spalt (27) zwischen den Kühlflächen umschließt.

3. Kühlplattenmodul nach Anspruch 2, **dadurch gekennzeichnet, dass**
• in der Polplatte (7a) die Platte durchdringende Bohrungen (29a) vorgesehen sind, welche die Dichtungsnut (26a) auf der der Kathode (3) zugewandten Oberfläche mit der Dichtungsnut (22a) auf der Kühlfläche verbinden
• in der Polplatte (7b) die Platte durchdringende Bohrungen (29b) vorgesehen sind, welche die Dichtungsnut (26b) auf der der Anode (2') zugewandten Oberfläche mit der Dichtungsnut (22b) auf der Kühlfläche verbinden
und diese Bohrungen mit Dichtungsmaterial gefüllt sind, welches die Dichtraupe (25c) mit den Dichtraupen (25a) und (25b) stoffschlüssig verbindet und so ein integrales beide Polplatten durchdringendes Dichtelement (25) bildet.

4. Kühlplattenmodul nach Anspruch 2, **dadurch gekennzeichnet, dass** das spritzgegossene integrale Dichtelement (25) die Stirnflächen der Polplatten (7a, 7b) umgreift und so die Dichtraupe (25c) mit den Dichtraupen (25a) und (25b) stoffschlüssig verbindet.

5. Kühlplattenmodul nach Anspruch 2, **dadurch gekennzeichnet, dass** die Dichtraupe (25c) sowohl durch mit Dichtungsmaterial gefüllte Bohrungen (29a, 29b) als auch die Stirnseiten der Polplatten (7a, 7b) umgreifendes Dichtungsmaterial stoffschlüssig mit den Dichtraupen (25a) und (25b) verbunden ist.

6. Kühlplattenmodul nach einem der vorhergehenden Ansprüche, **dadurch gekennzeichnet, dass** das integrale Dichtungselement (25) aus einem thermoplastische Elastomer, thermoplastischem Urethan oder Liquid Silicone Rubber besteht.

7. Kühlplattenmodul nach einem der vorhergehenden Ansprüche, **dadurch gekennzeichnet, dass** das leitfähige kompressible flächige Element (28) eine Folie aus flexiblem Graphit oder ein Vlies, Filz, Papier oder Gewebe aus Kohlenstoff- oder Graphitfasern ist.

8. Kühlplattenmodul nach einem der vorhergehenden Ansprüche, **dadurch gekennzeichnet, dass** die Kühlflächen beider Polplatten (7a, 7b) mit Kanälen (19a, 19b) zur Verteilung eines Kühlmittels versehen sind.

9. Kühlplattenmodul nach einem der vorhergehenden Ansprüche, **dadurch gekennzeichnet, dass** die den Elektroden (3, 2') zugewandten Oberflächen der Polplatten (7a, 7b) mit Reaktionsmedienverteilstrukturen (13, 12') versehen sind, die von Dichtraupen (25a, 25b) umschlossen sind.

10. Kühlplattenmodul nach einem der vorhergehenden Ansprüche, **dadurch gekennzeichnet, dass** die den Elektroden (3, 2') zugewandten Oberflächen der Polplatten keine Reaktionsmittelverteilstrukturen aufweisen und mit Elektroden (3,2') kombiniert werden, welche auf ihren den Polplatten zugewandten Oberflächen mit Reaktionsmittelverteilstrukturen (13, 12') versehen sind.

11. Kühlplattenmodul nach einem der vorhergehenden Ansprüche, **dadurch gekennzeichnet, dass** eine der Kühlflächen der Polplatten (7a, 7b) eine Vertiefung (30) aufweist für die Aufnahme des kompressiblen Elements (28), deren Tiefe so ausgelegt ist, noch das kompressible Element (28) soweit herausragt, dass sein Kompressionsweg ausreicht, um den abkühlungsbedingten Schrumpf des Dichtungsmaterials in den Dichtungsnuten (22a, 22b) zwischen den Kühlflächen zu kompensieren.

12. Verfahren zur Herstellung eines bipolaren Kühlplattenmoduls nach einem der vorhergehenden Ansprüche, umfassend die Schritte
• Vorformen der Polplatten (7a, 7b)
• Einlegen der vorgeformten Polplatten mit einem dicht an den Kühlflächen anliegenden, sich nur über den von den Dichtungsnuten (22a, 22b) umschlossenen Bereich erstreckenden flächigen kompressiblen Element (28) zwischen den Kühlflächen
• Einspritzen des Dichtungsmaterial, Füllung der Dichtungsnuten (22a, 22b, 26a, 26b) und Bildung des Dichtelements (25)
• Abkühlen des Dichtungsmaterials
• Entformen
wobei das flächige Element (28) eine Kompressionsreserve aufweist, die mindestens so groß ist wie der abkühlungsbedingte Dickenschrumpf des Dichtungsmaterials in den Dichtungsnuten (22a, 22b) und beim Einbau in einem Brennstoffzellenstack durch die dort wirkende Flächenpressung ausgeschöpft wird
